(19) Europäisches Patentamt
European Patent Office
Office européen des brevets

(11) EP 2 827 415 A1

(12) **EUROPEAN PATENT APPLICATION**
published in accordance with Art. 153(4) EPC

(43) Date of publication:
**21.01.2015 Bulletin 2015/04**

(21) Application number: **13760481.5**

(22) Date of filing: **11.03.2013**

(51) Int Cl.:
***H01M 8/02*** *(2006.01)* ***C08J 7/18*** *(2006.01)*
***H01B 1/06*** *(2006.01)* ***H01M 8/10*** *(2006.01)*

(86) International application number:
**PCT/JP2013/001574**

(87) International publication number:
**WO 2013/136762 (19.09.2013 Gazette 2013/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.03.2012 JP 2012058419**

(71) Applicant: **Nitto Denko Corporation**
**Ibaraki-shi, Osaka 567-8680 (JP)**

(72) Inventors:
- **SUZUKI, Takashi**
  **Ibaraki-shi**
  **Osaka 567-8680 (JP)**
- **EMORI, Hideyuki**
  **Ibaraki-shi**
  **Osaka 567-8680 (JP)**
- **NISHII, Hiroyuki**
  **Ibaraki-shi**
  **Osaka 567-8680 (JP)**

(74) Representative: **Hart-Davis, Jason et al**
**Cabinet Beau de Loménie**
**158, rue de l'Université**
**75340 Paris Cedex 07 (FR)**

# (54) POLYMER ELECTROLYTE MEMBRANE HAVING GRAFT CHAIN, AND PRODUCTION METHOD THEREFOR

(57) Disclosed is a production method including the steps of: graft-polymerizing a first monomer onto a polymer substrate so as to form a first graft polymer; and graft-polymerizing a second monomer onto the first graft polymer so as to form a second graft polymer. The first monomer contains a polar group. The second monomer contains at least one selected from the group consisting of an ion-conducting group and a site into which an ion-conducting group can be introduced. The second monomer has a higher polarity than the first monomer.

EP 2 827 415 A1

## Description

### TECHNICAL FIELD

The present invention relates to a polymer electrolyte membrane having graft chains, and a method for producing the same.

### BACKGROUND ART

Radiation-induced graft polymerization is known as one of the methods for producing polymer electrolyte membranes for use in fuel cells. In order to obtain high proton conductivity, it is preferable to form graft chains containing highly polar groups such as sulfonic acid groups.

In order to form graft chains containing sulfonic acid groups, attempts have been made to graft-polymerize relatively inexpensive styrene sulfonic acid sodium salt or the like directly onto a polymer substrate. However, styrene sulfonic acid sodium salt is polymerized very slowly, and styrene sulfonic acid sodium salt alone hardly reacts with the polymer. Therefore, it is necessary to copolymerize styrene sulfonic acid sodium salt with a readily graft-polymerizable monomer such as acrylic acid. In this case, a copolymerizable monomer used for this purpose may impair the heat resistance and oxidation resistance of the resulting polymer electrolyte membrane.

As a method for solving this problem, "a method for preparing an organic polymer material having sulfonic acid groups, which comprises graft-polymerizing to an organic polymer substrate a polymerizable monomer having a benzene ring and also having a vinyl group and a sulfonic acid group in the form of ammonium salt or lithium salt on the benzene ring" is disclosed (see claim 1 of JP 2005-008855 A).

JP 2005-008855 A discloses that an organic polymer material having sulfonic acid groups introduced in a predesigned form can be obtained. However, since the polymerizable monomer used in the method of JP 2005-008855 A has high polarity, the monomer is hard to penetrate into the organic polymer substrate if the substrate is in the form of a membrane. Therefore, the method of JP 2005-008855 A has a problem that it is difficult to achieve a high grafting ratio or it requires a very long reaction time to achieve a high grafting ratio.

### CITATION LIST

#### Patent Literature

Patent Literature 1: JP 2005-008855 A

### SUMMARY OF INVENTION

#### Technical Problem

As described above, in conventional methods, it is sometimes difficult to graft-polymerize highly polar monomers efficiently. On the other hand, in order to efficiently form polymer electrolytes having high ionic conductivity, it is required to efficiently graft-polymerize monomers containing highly polar groups. Under these circumstances, it is an object of the present invention to provide a method for producing a polymer electrolyte membrane by graft-polymerizing a highly polar monomer onto a polymer substrate efficiently. It is another object of the present invention to provide a polymer electrolyte membrane which is difficult to produce by conventional production methods.

#### Solution to Problem

In order to achieve the above objects, the present invention provides a method for producing a polymer electrolyte membrane having ionic conductivity This method includes: the steps of: (i) irradiating a polymer substrate with radiation; (ii) graft-polymerizing a first monomer onto the radiation-irradiated polymer substrate so as to form a first graft polymer; (iii) irradiating the first graft polymer with radiation; and (iv) graft-polymerizing a second monomer onto the radiation-irradiated first graft polymer so as to form a second graft polymer. The first monomer contains a polar group. The second monomer contains at least one selected from the group consisting of an ion-conducting group and a site into which an ion-conducting group can be introduced. The second monomer has a higher polarity than the first monomer.

#### Advantageous Effects of Invention

In the method of the present invention, after the first monomer having a polar group is graft-polymerized, the

second monomer having a higher polarity than the first monomer is graft-polymerized thereon. Therefore, this method makes it possible to graft-polymerize a more highly polar monomer onto a polymer substrate more efficiently than the method of graft-polymerizing a more highly polar monomer first. That is, the present invention makes it possible to graft-polymerize a monomer which is difficult to graft-polymerize or to increase its grafting ratio. Therefore, according to the present invention, it is possible to obtain a polymer electrolyte membrane which cannot be produced by conventional methods. In addition, according to the present invention, it is possible to choose a monomer which can be used for graft polymerization from a wider range of monomers.

DESCRIPTION OF EMBODIMENTS

Embodiments of the present invention will be described below. In the following description, the embodiments of the present invention will be described with reference to examples, but the present invention is not limited to the examples described below. In the following description, specific numerical values and materials may be shown as examples, but other numerical values and materials may be used as long as the effects of the present invention can be obtained. Compounds described below may be used alone or in combination, unless otherwise specified. It should be noted that the compounds described below are commercially available or can be synthesized by known methods.

(Production Method of Polymer Electrolyte Membrane)

The production method of the present invention is a method for producing a polymer electrolyte membrane having ionic conductivity. This production method includes the following steps (i) to (iv).

In the step (i), a polymer substrate is irradiated with radiation. The polymer substrate is usually a film-like (or a membrane-like) substrate (i.e., a polymer film).

The polymer substrate is not particularly limited, and any substrate may be used as long as it can be used for radiation-induced graft polymerization. For example, known polymer substrates used as substrates for radiation-induced graft polymerization may be used. A preferred example thereof is a substrate made of a hydrophobic polymer. Preferably, the polymer substrate is composed of an aromatic hydrocarbon polymer, an olefin polymer, or a fluorinated olefin polymer, or contains at least one selected from the group consisting of these polymers, in view of electrochemical stability, mechanical strength, etc.

Examples of the aromatic hydrocarbon polymer include polystyrene, polyethylene terephthalate, polybutylene terephthalate, polytrimethylene terephthalate, polyethylene naphthalate, polybutylene naphthalate, polyether ether ketone, polyether ketone, polysulfone, polyether sulfone, polyphenylene sulfide, polyarylate, polyetherimide, aromatic polyimide, and polyamide imide.

Examples of the olefin polymer include polyethylene (PE: such as low-density polyethylene, high-density polyethylene, and ultrahigh molecular weight polyethylene), polypropylene (PP), polybutene, and polymethylpentene.

Examples of the fluorinated olefin polymer include polyvinylidene fluoride (PVDF), polyvinyl fluoride, ethylene-tetrafluoroethylene copolymer (ETFE), vinylidene fluoride-hexafluoropropylene copolymer (FEP), tetrafluoroethylene-hexafluoropropylene copolymer, polytetrafluoroethylene, crosslinked polytetrafluoroethylene (PTFE), tetrafluoroethylene-perfluoroalkyl vinyl ether copolymer (PFA), polychlorotrifluoroethylene, tetrafluoroethylene-hexafluoropropylene-vinylidene fluoride copolymer.

Among these, preferably, the polymer substrate contains at least one selected from the group consisting of polystyrene, polyether ether ketone, polyether ketone, polysulfone, polyether sulfone, polyphenylene sulfide, polyarylate, polyetherimide, aromatic polyimide, polyamide imide, polyethylene, polypropylene, polyvinylidene fluoride, polyvinyl fluoride, ethylene-tetrafluoroethylene copolymer, vinylidene fluoride-hexafluoropropylene copolymer, crosslinked polytetrafluoroethylene, tetrafluoroethylene-perfluoroalkyl vinyl ether copolymer, and tetrafluoroethylene-hexafluoropropylene-vinylidene fluoride copolymer. The polymer substrate may be made of at least one selected from this group, or may be made of any one selected from this group.

The resin material constituting the polymer substrate may be a copolymer or a mixture of two or more polymers.

Preferably, an electrolyte membrane in a fuel cell has a low membrane resistance. One of the methods of reducing the membrane resistance is to reduce the membrane thickness. However, when the membrane thickness is reduced too much, the strength of the membrane decreases and the membrane is more likely to break and more susceptible to defects such as pinholes. Therefore, the thickness of the electrolyte membrane is preferably in a range of 6 $\mu$m to 130 $\mu$m, and more preferably in a range of 12 $\mu$m to 70 $\mu$m. Usually, the electrolyte membrane as a final product is thicker than the polymer substrate as a starting material because graft chains and sulfone groups are introduced into the substrate in the graft polymerization step and the sulfonation step. Therefore, the thickness of the polymer substrate as a starting material is preferably in a range of 5 $\mu$m to 100 $\mu$m, and more preferably in a range of 10 $\mu$m to 50 $\mu$m.

Examples of the radiation with which the polymer substrate is to be irradiated include ionizing radiations such as $\alpha$ rays, $\beta$ rays, $\gamma$ rays, electron beams, and ultraviolet rays. Examples of the preferred radiation include $\gamma$ rays and

electron beams. The radiation dose is usually in a range of 1 kGy to 300 kGy, and preferably in a range of 10 kGy to 400 kGy. When the radiation dose is less than 1 kGy, radical production may decrease, resulting in difficulty in initiating graft polymerization. When the radiation dose is more than 400 kGy, excessive polymerization reaction or deterioration of the resin may occur. In order to prevent deactivation, the radiation-irradiated polymer substrate may be maintained at a low temperature (for example, -30°C or lower, preferably -60°C or lower) until it is subjected to graft polymerization.

In the next step (ii), a first monomer is graft-polymerized onto the radiation-irradiated polymer substrate so as to form a first graft polymer. In a preferred example, the graft polymerization in the step (ii) is carried out in a solid-liquid two-phase system. For example, the graft polymerization is carried out by bringing the radiation-irradiated polymer substrate into contact with a monomer solution containing the first monomer. It is preferable to carry out the graft polymerization in an atmosphere with the lowest oxygen concentration possible in order to prevent the reaction from being inhibited by the presence of oxygen.

The first monomer contains a polar group. The polar group may be at least one selected from the group consisting of a carboxyl group, an ester of a carboxyl group, a hydroxyl group, an amino group, an amide group, and an epoxy group, or may be any one selected from this group. It is possible to increase the polarity of the polymer substrate globally or locally by carrying out graft polymerization using the first monomer containing a polar group. That is, the polarity of the first graft polymer obtained in the step (ii) is globally or locally higher than that of the polymer substrate before being graft-polymerized.

It is necessary that the first polymer be graft-polymerizable. Therefore, the first monomer contains an unsaturated carbon-carbon bond (for example, a carbon-carbon double bond such as a vinyl group) in addition to a polar group.

The first monomer may be at least one monomer represented by the following formula (1).

[Chemical Formula 1]

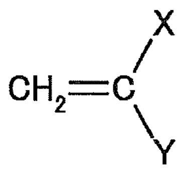

(1)

where X represents a hydrogen atom or an alkyl group, and Y represents any one of the following groups:

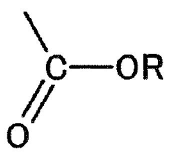 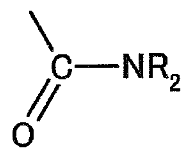 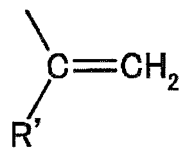 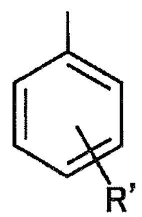

where R represents a hydrogen atom, an alkyl group, or an alkyl group substituted with a hydroxyl group, an amino group, or an epoxy group, R' represents a hydroxyl group, a carboxyl group, an amino group, an epoxy group, or an alkyl group substituted with any one of a hydroxyl group, a carboxyl group, an amino group, and an epoxy group, and when a plurality of Rs are included in the formula (1), the Rs may be the same as or different from each other.

The position of R' bonded to a benzene ring is not particularly limited, and R' may be in the meta position or in the para position. In this description, examples of the alkyl group include an alkyl group having 1 to 6 carbon atoms. Example of such an alkyl group include a methyl group, an ethyl group, a propyl group, a butyl group (for example, a tert-butyl group), and a pentyl group.

The first monomer may be at least one or any one selected from the group consisting of (meth)acrylic acid, (meth)acrylamide, glycidyl (meth)acrylate, glycerol (meth)acrylate, hydroxypropyl (meth)acrylate, 2-hydroxyethyl (meth)acrylate, 3-chloro-2-hydroxypropyl (meth)acrylate, tetrahydro-2-furanylmethyl (meth)acrylate, 2-furylmethyl (meth)acrylate, alkoxyalkyl (meth)acrylate, oligoalkoxyalkyl (meth)acrylate, alkoxyoligoalkoxyalkyl (meth)acrylate, N-alkyl (meth)acrylamide, N,N-dialkyl (meth)acrylamide, N-(meth)acryloyl-2-methylaziridine, N-(meth)acryloyl aziridine, N-(meth)acryloyl azetidine, N-(meth)acryloyl pyrrolidine, N-(meth)acryloyl piperidine, N-(meth)acryloyl morpholine, N-[tris(hydroxymethyl)methyl](meth)acrylamide, N-hydroxyethyl (meth)acrylamide, N-[2-(2-hydroxyethoxy)ethyl] (meth)acrylamide, 2-dimethylaminoethyl (meth)acrylate, 2-diethylaminoethyl (meth)acrylate, 2-(butylamino)ethyl (meth)acrylate, 2-isocyanatoethyl (meth)acrylate, 2-(diisopropylamino)ethyl (meth)acrylate, 2-N-morpholinoethyl (meth)acrylate, N,N-dimethylaminoethyl (meth)acrylamide, N,N-dimethylaminopropyl (meth)acrylamide, vinylbenzoic

acid, hydroxyl group-containing styrene, amino group-containing styrene, hydroxyl group-containing diene, and amino group-containing diene.

In the graft polymerizations in the step (ii) and the step (iv), one type of monomer may be used alone, or two or more types of monomers may be used in combination. When two or more types of monomers are used in combination, a copolymer of these monomers as a graft chain is introduced into the polymer substrate.

As a first solvent used to dissolve the first monomer (i.e., a solvent for a monomer solution), any solvent in which the first monomer is soluble but the polymer substrate is substantially insoluble is selected. Examples of the first solvent include: an aromatic hydrocarbon such as benzene, toluene, and xylene; a phenolic hydroxyl group-containing aromatic compound such as phenol and cresol; an alcohol such as methanol, ethanol, and isopropanol; a polar aprotic solvent such as N,N-dimethylformamide (DMF), N,N-dimethylacetamide (DMAc), dimethyl sulfoxide (DMSO), and N-methylpyrrolidone (NMP); and water. A mixture of two or more compounds may be used as the first solvent.

The concentration of the monomer solution may be determined according to the polymerizability of the first monomer and the target grafting ratio. Preferably, the concentration of the monomer solution is 20 wt.% or more. When the concentration of the monomer is less than 20 wt.%, the rate at which the grafting reaction proceeds tends to decrease.

The reaction time of the graft polymerization is, for example, about 10 minutes to 12 hours. The reaction temperature of the graft polymerization is, for example, in a range of 0°C to 100°C, and preferably in a range of 40°C to 80°C. It is preferable to remove dissolved oxygen in the first monomer solution before the graft polymerization. For example, the first monomer solution is poured into a glass or stainless steel vessel, and vacuum degassing or inert gas (such as nitrogen gas) bubbling is performed to remove dissolved oxygen. Then, the radiation-irradiated polymer substrate is put into the monomer solution so as to carry out graft polymerization.

After the graft polymerization is allowed to proceed for a predetermined time, the film-like first graft polymer is taken out of the reaction solution. Next, in order to remove the first solvent, unreacted monomer, and homopolymer of the monomer, the first graft polymer is preferably washed 3 to 6 times with an appropriate amount of dissolving agent. As the dissolving agent for washing, any dissolving agent in which the monomer and the homopolymer are readily soluble but the first graft polymer is insoluble can be used. For example, toluene, xylene, acetone, or the like may be used. After the washing, the first graft polymer is usually dried.

In the next step (iii), the first graft polymer is irradiated with radiation. The conditions under which the first graft polymer is irradiated with radiation are not particularly limited. For example, the conditions may be selected from the conditions described in the step (i).

In the next step (iv), a second monomer is graft-polymerized onto the first graft polymer which has been irradiated with radiation in the step (iii) so as to form a second graft polymer. The graft polymerization in the step (iv) can be carried out according to the procedure described for the graft polymerization in the step (ii). For example, the graft polymerization in the step (iv) is preferably carried out in a solid-liquid two-phase system.

The second monomer contains at least one selected from the group consisting of an ion-conducting group and a site into which an ion-conducting group can be introduced, and normally contains either one of these. Both an ion-conducting group and a site into which an ion-conducting group can be introduced normally have polarity Examples of the site into which an ion-conducting group can be introduced include an amino group and a phosphino group. The ion-conducting group is typically a group having ion exchange capacity.

The second monomer has a higher polarity than the first monomer. Even if an attempt is made to graft-polymerize a highly polar monomer, without any treatment, onto a polymer substrate, it is difficult to increase the grafting ratio or it requires a long reaction time to increase the grafting ratio in most cases. In contrast, in the present invention, since the first monomer having a polar group is previously graft-polymerized, it is possible to increase the grafting ratio of the second monomer having a higher polarity or to shorten the polymerization time.

In an example, the first monomer and the second monomer satisfy the following conditions.

(1) The polar group contained in the first monomer is at least one or any one selected from the group consisting of a carboxyl group, an ester of a carboxyl group, a hydroxyl group, an amino group, an amide group, and an epoxy group.
(2) The polar group contained in the second monomer is at least one or any one selected from the group consisting of a sulfonic acid group and a salt of a sulfonic acid group. The cation constituting the salt is not particularly limited, and it may be, for example, $Li^+$, $Na^+$, $K^+$, or $Cs^+$.

In another preferred example, the polar group contained in the first monomer is any one selected from a carboxyl group and an amide group, and the polar group contained in the second monomer is an amino group of allylamine or a salt thereof.

In still another preferred example, the polar group contained in the first monomer is any one selected from the group consisting of a carboxyl group, an ester of a carboxyl group, a hydroxyl group, an amino group, an amide group, and an epoxy group, and the polar group contained in the second monomer is a phosphino group of allylphosphine or phosphino group-containing (meth)acrylate, or a salt thereof.

The second monomer may be at least one monomer represented by the following formula (2). In an example of the method, the first monomer represented by the above formula (1) is used in the step (ii), and the second monomer represented by the following formula (2) is used in the step (iv).

[Chemical Formula 2]

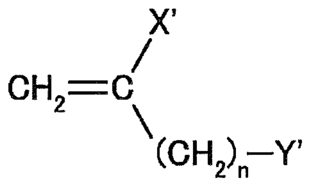

(2)

where X' represents a hydrogen atom or an alkyl group, Y' represents an amino group, a salt of an amino group, a sulfonic acid group, a salt of a sulfonic acid group, or an alkyl group, a phenyl group, an amide group, or an ester substituted with any one of an amino group, a salt of an amino group, a sulfonic acid group, and a salt of a sulfonic acid group, and n is an integer of 0 to 6.

In the case where a polymer electrolyte membrane having cation exchange capacity is produced, the second monomer may be at least one or any one selected from the group consisting of (meth)acrylamide-tert-butyl sulfonic acid, a salt of (meth)acrylamide-tert-butyl sulfonic acid, vinyl sulfonic acid, a salt of vinyl sulfonic acid, styrene sulfonic acid, a salt of styrene sulfonic acid, sulfoalkyl (meth)acrylate, and a salt of sulfoalkyl (meth)acrylate. In the case where the second monomer containing a salt as a polar group is used, a cation of the salt may be substituted with a proton after a graft chain is formed.

In the case where a polymer electrolyte membrane having anion exchange capacity is produced, the second monomer may be at least one or any one selected from the group consisting of an inorganic acid salt of 2-aminoethyl (meth)acrylate, [2-(meth)acryloyloxyethyl] trimethyl ammonium halide, allylamine, an inorganic acid salt of allylamine, N-methylallylamine, an inorganic acid salt of N-methylallylamine, N-ethylallylamine, an inorganic acid salt of N-ethylallylamine, N-cyclohexylallylamine, an inorganic acid salt of N-cyclohexylallylamine, N,N-dimethylallylamine, an inorganic acid salt of N,N-dimethylallylamine, N,N-diethylallylamine, an inorganic acid salt of N,N-diethylallylamine, N,N-(methyl)cyclohexylallylamine, an inorganic acid salt of N,N-(methyl)cyclohexylallylamine, N,N-(ethyl)cyclohexylallylamine, an inorganic acid salt of N,N-(ethyl)cyclohexylallylamine, N,N-dicyclohexylallylamine, an inorganic acid salt of N,N-dicyclohexylallylamine, allylaziridine, an inorganic acid salt of allylaziridine, allylazetidine, an inorganic acid salt of allylazetidine, allylpyrrolidine, an inorganic acid salt of allylpyrrolidine, allylpiperidine, an inorganic acid salt of allylpiperidine, allylpiperazine, an inorganic acid salt of allylpiperazine, allyl-4-formylpiperadine, an inorganic acid salt of allyl-4-formylpiperadine, allylmorpholine, an inorganic acid salt of allylmorpholine, diallylamine, an inorganic acid salt of diallylamine, N-methyldiallylamine, an inorganic acid salt of N-methyldiallylamine, N-ethyldiallylamine, an inorganic acid salt of N-ethyldiallylamine, N-benzyldiallylamine, an inorganic acid salt of N-benzyldiallylamine, diallyldimethylammonium halide, diallyldiethylammonium halide, diallylmethylbenzylammonium halide, diallylethylbenzylammonium halide, diallyldibenzylammonium halide, 1,1-diallylpiperazinium halide, 1,1-diallyl-4-formylpiperazinium halide, tetraallylammonium halide, tetraallylpiperazinium dihalide, 2-diethylphosphiteisopropyl (meth)acrylate, an inorganic acid salt of 2-diethylphosphiteisopropyl (meth)acrylate, allyldiphenylphosphine, an inorganic acid salt of allyldiphenylphosphine, diallylphenylphosphine, an inorganic acid salt of diallylphenylphosphine, triallylphosphine, an inorganic acid salt of triallylphosphine, allyltriphenylphosphonium halide, and allyl[tolyl(dimethylamino)phosphonium halide]. The inorganic acid constituting the inorganic acid salt is not particularly limited, and it may be, for example, carbonic acid, hydrochloric acid, sulfuric acid, nitric acid, or phosphoric acid.

Some of the above-mentioned second monomers used to produce a polymer electrolyte membrane having anion exchange capacity are subjected to a treatment for providing anion exchange capacity after the graft polymerization. Examples of these monomers include allylamine, N-methylallylamine, N-ethylallylamine, N-cyclohexylallylamine, N,N-dimethylallylamine, N,N-diethylallylamine, N,N-(methyl)cyclohexylallylamine, N,N-(ethyl)cyclohexylallylamine, N,N-dicyclohexylallylamine, allylaziridine, allylazetidine, allylpyrrolidine, allylpiperidine, allylpiperazine, allyl-4-formylpiperadine, allylmorpholine, diallylamine, N-methyldiallylamine, N-ethyldiallylamine, N-benzyldiallylamine, 2-diethylphosphiteisopropyl (meth)acrylate, allyldiphenylphosphine, diallylphenylphosphine, and triallylphosphine. A group having anion exchange capacity can be introduced by treating the structural unit of any of these monomers by a known method. For example, a quaternary ammonium group having anion exchange capacity (anionic conductivity) can be formed by subjecting a graft chain of any of these monomers to a treatment with methyl iodide, ethyl iodide, propyl iodide, butyl iodide, or the like. This treatment may be performed before the graft polymerization so as to use the treated monomer as the second monomer.

As a second solvent used to dissolve the second monomer, any solvent in which the second monomer is soluble

but the first graft polymer is substantially insoluble is selected. Examples of the second solvent include: water; a polar aprotic solvent such as N,N-dimethylformamide (DMF), N,N-dimethylacetamide (DMAc), dimethyl sulfoxide (DMSO), and N-methylpyrrolidone (NMP); an alcohol such as methanol, ethanol, and isopropanol; a phenolic hydroxyl group-containing aromatic compound such as phenol and cresol; and an aromatic hydrocarbon such as benzene, toluene, and xylene. Considering that the first graft polymer is impregnated with the second monomer having a higher polarity, it is preferable to use a polar solvent. A mixture of two or more compounds may be used as the second solvent.

The concentration of the monomer solution may be determined according to the polymerizability of the second monomer and the target grafting ratio. Preferably, the concentration of the monomer solution is 20 wt.% or more. When the concentration of the monomer is less than 20 wt.%, the rate at which the grafting reaction proceeds tends to decrease.

The conditions of the graft polymerization (time, temperature, bubbling, etc.) are not particularly limited. The conditions may be selected from the conditions described in the step (ii). The reaction may be carried out for a long time to increase the grafting ratio. As described for the step (ii), the second graft polymer obtained in the step (iv) is usually washed and dried after the graft polymerization. Furthermore, the second graft polymer is subjected, as needed, to a treatment for introducing an ion-conducting group into a site into which an ion-conducting group can be introduced. Thus, a polymer electrolyte membrane is obtained.

As described above, when the difference between the polarity of a film-like polymer substrate and that of a monomer forming a graft chain is large, it may be difficult to carry out the graft polymerization. On the other hand, in the production method of the present invention, the first graft chain is formed using the first monomer having a polar group, and then the second graft chain is formed using the second monomer having a higher polarity. Therefore, in the production method of the present invention, presumably, it is easier to impregnate the substrate with the second monomer to form the second graft chain in the monomer solution, and as a result, the graft polymerization can be carried out efficiently.

(Polymer Electrolyte Membrane)

The polymer electrolyte membrane of the present invention is a polymer electrolyte membrane having ionic conductivity, and includes a polymer (hereinafter sometimes referred to as a "polymer (P)") having a main chain and a first graft chain and a second graft chain that are bonded to the main chain. That is, the polymer electrolyte membrane of the present invention is composed of the polymer (P). The first graft chain is a graft chain consisting of the first monomer. The second graft chain is a graft chain consisting of the second monomer. The polymer (P) is a polymer formed by the production method of the present invention. That is, the polymer (P) is a polymer formed by the steps including the steps (i) to (iv) described above. Therefore, the same description is not repeated. For example, since the first and second monomers are described above, the description thereof is not repeated.

In another aspect, the graft chain of the polymer (P) includes a first graft chain formed of a structural unit derived from the first monomer and a second graft chain formed of a structural unit derived from the second monomer.

(Membrane-Electrode Assembly and Fuel Cell)

The polymer electrolyte membrane of the present invention can be used to form a membrane-electrode assembly for use in a polymer electrolyte fuel cell and to form a fuel cell including a membrane-electrode assembly. Known configurations can be applied to the configurations of a membrane-electrode assembly and a fuel cell, except for the polymer electrolyte membrane.

EXAMPLES

Hereinafter, the present invention will be described in detail with reference to Examples, but the present invention is not limited to the following Examples. In describing the following Examples and Comparative Examples, compounds and polymers may be indicated by abbreviations shown in the description. In the following description, acrylamide-tert-butyl sulfonic acid salt (ATBS) is manufactured by Toagosei Co., Ltd., sodium styrene sulfonate (NaSS) is manufactured by Wako Pure Chemical Industries, Ltd., and N,N-dimethylaminopropyl acrylamide (DMAPA) is manufactured by Kohjin Co., Ltd.

(Example 1)

First, as a polymer substrate, a 8-cm-square piece was cut from a polyvinylidene fluoride, (PVDF) film (with a thickness of 50 $\mu$m). Both sides of this PVDF film were irradiated with an electron beam at room temperature in a vacuum. Specifically, each side of the film was irradiated with an electron beam of 30 kGy under the condition of an accelerating voltage of 60 kV. After the electron beam irradiation, the PVDF film was stored at -60°C until it was subjected to graft polymerization.

Next, 100 g of methacrylic acid (MAA), 0.69 g of hydroquinone, and 100 g of toluene were mixed to prepare a monomer solution. This monomer solution was purged with nitrogen gas to remove oxygen dissolved in the monomer solution. Next, the electron beam-irradiated PVDF film prepared as above was immersed in the resulting monomer solution (70°C) for 90 minutes so as to allow graft polymerization to proceed.

After the graft polymerization, the film was taken out of the monomer solution, and immersed and washed in toluene for at least one hour and then further washed with acetone for at least 30 minutes. Lastly, the film was dried in an oven at 60°C. Thus, a graft membrane (PVDF-g-MAA) in which MAA was graft-polymerized on PVDF was obtained. The grafting ratio of the graft membrane thus obtained was 34%. This grafting ratio was calculated from the following equation (1):

$$X_{dg}\,(\%) = 100 \cdot (W_1 - W_0)/W_0 \qquad (1)$$

where Wo is the weight (g) of the polymer substrate before the grafting, and $W_1$ is the weight (g) of the (dried) graft membrane after the first-stage graft polymerization.

The PVDF-g-MAA thus obtained was used as a polymer substrate and was irradiated with an electron beam at room temperature in a vacuum. Specifically, each side of the film was irradiated with an electron beam of 60 kGy under the condition of an accelerating voltage of 60 kV. After the electron beam irradiation, the film was stored at -60°C until it was subjected to graft polymerization.

Next, 18 g of acrylamide-tert-butyl sulfonic acid salt (ATBS), 21.6 g of N,N-dimethylformamide (DMF), and 5.4 g of 0.2 M sulfuric acid were mixed to prepare a monomer solution. This monomer solution was purged with nitrogen gas to remove oxygen dissolved in the monomer solution. Next, the graft membrane (PVDF-g-MAA) prepared as above was immersed in the resulting monomer solution (75°C) for 200 minutes so as to allow the second-stage graft polymerization to proceed.

After the graft polymerization, the film was taken out of the monomer solution, and immersed and washed in toluene for at least one hour and then further washed with acetone for at least 30 minutes. Lastly, the film was dried in an oven at 60°C. Thus, a graft membrane (PVDF-g-MAA-g-ATBS) in which MAA and ATBS were graft-polymerized on PVDF in two stages was obtained. The grafting ratio in the second-stage graft polymerization was 55% relative to the PVDF film (starting material). This grafting ratio was calculated from the following equation:

$$X_{dg}\,(\%) = 100 \cdot (W_2 - W_1)/W_0 \qquad (2)$$

where Wo is the weight (g) of the polymer substrate before the grafting, $W_1$ is the weight (g) of the (dried) graft membrane after the first-stage graft polymerization, and $W_2$ is the weight (g) of the (dried) graft membrane after the second-stage graft polymerization.

(Example 2)

First, first-stage graft polymerization was carried out in the same manner as in Example 1, except that the reaction time of the graft polymerization was 150 minutes. Thus, PVDF-g-MAA with a grafting ratio of 52% was obtained.

Next, second-stage graft polymerization was carried out in the same manner as in Example 1, except that the PVDF-g-MAA (with a grafting ratio of 52%) thus obtained was used. Thus, a graft membrane (PVDF-g-MAA-g-ATBS) was obtained. The grafting ratio in the second-stage graft polymerization was 88% relative to the PVDF film (starting material).

(Comparative Example 1)

First, as a polymer substrate, a 8-cm-square piece was cut from a polyvinylidene fluoride (PVDF) film (with a thickness of 50 μm). Both sides of this PVDF film were irradiated with an electron beam at room temperature in a vacuum. Specifically, each side of the film was irradiated with an electron beam of 80 kGy under the condition of an accelerating voltage of 60 kV. After the electron beam irradiation, the PVDF film was stored at -60°C until it was subjected to graft polymerization.

Next, 18 g ofATBS, 21.6 g of DMF, and 5.4 g of 0.2 M sulfuric acid were mixed to prepare a monomer solution. This monomer solution was purged with nitrogen gas to remove oxygen dissolved in the monomer solution. Next, the electron beam-irradiated PVDF film prepared as above was immersed in the resulting monomer solution (70°C) for 360 minutes so as to allow graft polymerization to proceed. After the graft membrane was taken out of the solution, it was

washed in the same manner as in Example 1. The grafting ratio of the graft membrane thus obtained was 26%. It should be noted that the conditions of the graft polymerization (the conditions of the electron beam irradiation and the conditions such as the temperature and time of the graft polymerization) in Comparative Example 1 are those in which the grafting ratio tends to increase compared with the conditions of the second-stage graft polymerization in Examples 1 and 2.

(Example 3)

First, first-stage graft polymerization was carried out in the same manner as in Example 2 to prepare PVDF-g-MAA (with a grafting ratio of 52%) shown in Example 2. The PVDF-g-MAA thus obtained was used as a polymer substrate and was irradiated with an electron beam at room temperature in a vacuum. Specifically, each side of the film was irradiated with an electron beam of 60 kGy under the condition of an accelerating voltage of 60 kV. After the electron beam irradiation, the film was stored at -60°C until it was subjected to graft polymerization.

Next, 18 g of ATBS and 15 g of water were mixed to prepare a monomer solution. This monomer solution was purged with nitrogen gas to remove oxygen dissolved in the monomer solution. Next, the electron beam-irradiated PVDF-g-MAA prepared as above was immersed in the resulting monomer solution (75°C) for 120 minutes so as to allow the second-stage graft polymerization to proceed. After the graft membrane was taken out of the solution, it was washed in the same manner as in Example 1. The grafting ratio of the PVDF-g-MAA-g-ATBS thus obtained in the second-stage graft polymerization was 6.8% relative to the PVDF film.

(Comparative Example 2)

First, as a polymer substrate, a 8-cm-square piece was cut from a polyvinylidene fluoride (PVDF) film (with a thickness of 50 μm). Both sides of this PVDF film were irradiated with an electron beam at room temperature in a vacuum. Specifically, each side of the film was irradiated with an electron beam of 60 kGy under the condition of an accelerating voltage of 60 kV. After the electron beam irradiation, the PVDF film was stored at -60°C until it was subjected to graft polymerization.

Next, 15 g of ATBS and 15 g of water were mixed to prepare a monomer solution. This monomer solution was purged with nitrogen gas to remove oxygen dissolved in the monomer solution. Next, the electron beam-irradiated PVDF film prepared as above was immersed in the resulting monomer solution (75°C) for 120 minutes so as to allow graft polymerization to proceed. After the graft membrane was taken out of the solution, it was washed in the same manner as in Example 1. The grafting ratio of the graft membrane thus obtained was 0.3%.

(Example 4)

Graft polymerization was carried out in the same manner as the first-stage graft polymerization in Example 1, except that low-density polyethylene (LDPE) was used as a polymer substrate and that the reaction time of the graft polymerization was 120 minutes. The grafting ratio of the graft membrane (LDPE-g-MAA) thus obtained was 40%. This LDPE-g-MAA was irradiated with an electron beam at room temperature in a vacuum. Specifically, each side of the film was irradiated with an electron beam of 60 kGy under the condition of an accelerating voltage of 60 kV. After the electron beam irradiation, the film was stored at -60°C until it was subjected to graft polymerization.

Next, a dimethyl sulfoxide (DMSO) solution of sodium styrene sulfonate (NaSS) with a concentration of 20% was prepared to obtain a monomer solution. This monomer solution was purged with nitrogen gas to remove oxygen dissolved in the monomer solution. Next, the electron beam-irradiated LDPE-g-MAA prepared as above was immersed in the resulting monomer solution (70°C) for 270 minutes so as to allow the second-stage graft polymerization to proceed. After the graft membrane was taken out of the solution, it was washed in the same manner as in Example 1. The grafting ratio of the LDPE-g-MAA-g-NaSS thus obtained in the second-stage graft polymerization was 27% relative to the LDPE (starting material).

(Comparative Example 3)

First, as a polymer substrate, a 8-cm-square piece was cut from a LDPE film (with a thickness of 50 μm). Both sides of this LDPE film were irradiated with an electron beam at room temperature in a vacuum. Specifically, each side of the film was irradiated with an electron beam of 60 kGy under the condition of an accelerating voltage of 60 kV. After the electron beam irradiation, the LDPE film was stored at -60°C until it was subjected to graft polymerization.

Next, a dimethyl sulfoxide (DMSO) solution of sodium styrene sulfonate (NaSS) with a concentration of 20% was prepared to obtain a monomer solution. This monomer solution was purged with nitrogen gas to remove oxygen dissolved in the monomer solution. Next, the electron beam-irradiated LDPE-g-MAA prepared as above was immersed in the resulting monomer solution (70°C) for 270 minutes so as to attempt the second-stage polymerization. However,

the grafting ratio of the resulting film was 0.0%, which means that the graft polymerization did not substantially occur.

(Example 5)

First, as a polymer substrate, a 4-cm-square piece was cut from a high-density polyethylene (HDPE) film (with a thickness of 50 μm). Both sides of this HDPE film were irradiated with an electron beam at room temperature in a vacuum. Specifically, each side of the film was irradiated with an electron beam of 90 kGy under the condition of an accelerating voltage of 60 kV. After the electron beam irradiation, the HDPE film was stored at -60°C until it was subjected to graft polymerization.

70 g of N,N-dimethylaminopropyl acrylamide (DMAPA) and 30 g of xylene were mixed to prepare a monomer solution. This monomer solution was purged with nitrogen gas to remove oxygen dissolved in the monomer solution. Next, the electron beam-irradiated HDPE film prepared as above was immersed in the resulting monomer solution (70°C) for 7 hours so as to allow graft polymerization to proceed. After the graft polymerization, the graft membrane was washed in the same manner as in Example 1. The grafting ratio of the HDPE-g-DMAPA thus obtained was 25%.

The HDPE-g-DMAPA (with a grafting ratio of 25%) thus obtained was used as a polymer substrate and was irradiated with an electron beam at room temperature in a vacuum. Specifically, each side of the film was irradiated with an electron beam of 190 kGy under the condition of an accelerating voltage of 60 kV. The electron beam-irradiated film was used directly for the second-stage graft polymerization.

Next, 7 g of N,N-dimethylallylamine (DMAA) hydrochloride and 3 g of water were mixed to prepare a monomer solution. This monomer solution was purged with nitrogen gas to remove oxygen dissolved in the monomer solution. Next, the graft membrane (HDPE-g-DMAPA) prepared as above was immersed in the resulting monomer solution (50°C) for 48 hours so as to allow the second-stage graft polymerization to proceed.

After the graft polymerization, the film was taken out of the monomer solution, and immersed and washed in toluene for at least one hour and then further washed with acetone for at least 30 minutes. Lastly, the film was dried in an oven at 60°C. Thus, a graft membrane (HDPE-g-DMAPA-g-DMAA) in which DMAPA and DMAA were graft-polymerized on HDPE in two stages was obtained. The grafting ratio in the second-stage graft polymerization was 5.2% relative to the HDPE film (starting material).

(Comparative Example 4)

First, as a polymer substrate, a 7 cm x 2 cm piece was cut from a HDPE film (with a thickness of 50 μm). Both sides of this HDPE film were irradiated with an electron beam at room temperature in a vacuum. Specifically, each side of the film was irradiated with an electron beam of 90 kGy under the condition of an accelerating voltage of 60 kV. After the electron beam irradiation, the HDPE film was stored at -60°C until it was subjected to graft polymerization.

Next, 7 g of DMAA and 3 g of water were mixed to prepare a monomer solution. This monomer solution was purged with nitrogen gas to remove oxygen dissolved in the monomer solution. Next, the electron beam-irradiated HDPE film prepared as above was immersed in the resulting monomer solution (50°C) for 48 hours so as to allow graft polymerization to proceed. The grafting ratio of the film thus obtained was 0.2%.

(Example 6)

In Example 6, a graft membrane (HDPE-g-DMAPA-g-DMAA) was prepared in the same manner as in Example 5, except that the solvent for a monomer solution used for the second-stage graft polymerization was changed. In the second-stage graft polymerization in Example 6, a mixed solvent of toluene and methanol (toluene-methanol volume ratio of 5:5) was used instead of water, as the solvent for the monomer solution. Specifically, 7 g of DMAA and 7 g of the mixed solvent were mixed to prepare the monomer solution. The grafting ratio of the graft membrane (HDPE-g-DMAPA-g-DMAA) in the second-stage graft polymerization was 6.0% relative to the HDPE film (starting material).

(Comparative Example 5)

In Comparative Example 5, an attempt to prepare a graft membrane (HDPE-g-DMAPA-g-DMAA) was made in the same manner as in Comparative Example 4, except that the solvent for a monomer solution used for the second-stage graft polymerization was changed. In the second-stage graft polymerization in Comparative Example 5, a mixed solvent of toluene and methanol (toluene-methanol volume ratio of 5:5) was used instead of water, as the solvent for the monomer solution. Specifically, 7 g of DMAA and 7 g of the mixed solvent were mixed to prepare the monomer solution. However, the grafting ratio of the resulting membrane in the second-stage graft polymerization was 0.0%, which means that the second-stage graft polymerization did not substantially occur.

[Table 1]

| | Substrate before final graft polymerization | First-stage grafting ratio 1) (%) | Final (second-stage) graft polymerization | | Polymerization temperature (°C) | Polymerization time | Polymerization solvent | Second-stage grafting Ratio 2) (%) |
|---|---|---|---|---|---|---|---|---|
| | | | Radiation dose (kGy) | Monomer | | | | |
| Ex. 1 | PVDF-g-MAA | 34 | 60 | ATBS | 75 | 200 min. | DMF 3) | 55 |
| Ex. 2 | PVDF-g-MAA | 52 | 60 | ATBS | 75 | 200 min. | DMF 3) | 88 |
| Com. Ex. 1 | PVDF | - | 80 | ATBS | 70 | 360 min. | DMF 3) | 26 |
| Ex. 3 | PVDF-g-MAA | 52 | 60 | ATBS | 75 | 120 min. | Water | 6.8 |
| Com. Ex. 2 | PVDF | - | 60 | ATBS | 75 | 120 min. | Water | 0.3 |
| Ex. 4 | LDPE-g-MAA | 40 | 60 | NaSS | 70 | 270 min. | DMSO | 27 |
| Com. Ex. 3 | LDPE | - | 60 | NaSS | 70 | 270 min. | DMSO | 0.0 |
| Ex. 5 | HDPE-g-DMAPA | 25 | 190 | DMAA | 50 | 48 hr. | Water | 5.2 |
| Com. Ex. 4 | HDPE | - | 90 | DMAA | 50 | 48 hr. | Water | 0.2 |
| Ex. 6 | HDPE-g-DMAPA | 25 | 190 | DMAA | 50 | 48 hr. | Mixed solvent 4) | 6.0 |
| Com. Ex. 5 | HDPE | - | 90 | DMAA | 50 | 48 hr. | Mixed solvent 4) | 0.0 |

1) Grafting ratio of MAA relative to polymer substrate
2) Grafting ratio in second-stage graft polymerization relative to polymer substrate
3) Sulfuric acid (0.2 mol/L) in an amount of 25% of DMF weight was added
4) Mixed solvent with toluene-methanol volume ratio of 5:5

As is clear from a comparison between Examples 1 and 2 and Comparative Example 1, a comparison between Example 3 and Comparative Example 2, a comparison between Example 4 and Comparative Example 3, a comparison between Example 5 and Comparative Example 4, and a comparison between Example 6 and Comparative Example 5, the grafting ratio of a monomer containing an ion-conducting group or a precursor thereof could be increased by use of the method of the present invention.

INDUSTRIAL APPLICABILITY

The present invention can be used for polymer electrolyte membranes, and membrane-electrode assemblies and fuel cells including polymer electrolyte membranes.

## Claims

1. A method for producing a polymer electrolyte membrane having ionic conductivity, the method comprising the steps of:

   (i) irradiating a polymer substrate with radiation;
   (ii) graft-polymerizing a first monomer onto the radiation-irradiated polymer substrate so as to form a first graft polymer;
   (iii) irradiating the first graft polymer with radiation; and
   (iv) graft-polymerizing a second monomer onto the radiation-irradiated first graft polymer so as to form a second graft polymer, wherein
   the first monomer contains a polar group,
   the second monomer contains at least one selected from the group consisting of an ion-conducting group and a site into which an ion-conducting group can be introduced, and
   the second monomer has a higher polarity than the first monomer.

2. The method according to claim 1, wherein the polar group contained in the first monomer is at least one selected from the group consisting of a carboxyl group, an ester of a carboxyl group, a hydroxyl group, an amino group, an amide group, and an epoxy group.

3. The method according to claim 1, wherein the first monomer is at least one monomer represented by the following formula (1):

[Chemical Formula 1]

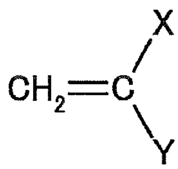

(1)

where X represents a hydrogen atom or an alkyl group, and Y represents any one of the following groups:

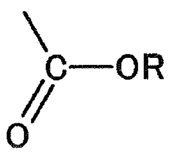

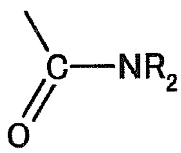

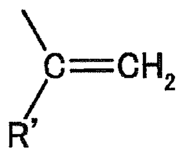

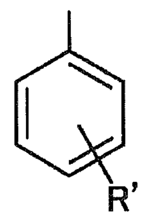

where R represents a hydrogen atom, an alkyl group, or an alkyl group substituted with a hydroxyl group, an amino group, or an epoxy group, R' represents a hydroxyl group, a carboxyl group, an amino group, an epoxy group, or an alkyl group substituted with any one of a hydroxyl group, a carboxyl group, an amino group, and an epoxy group,

and when a plurality of Rs are included in the formula (1), the Rs may be the same as or different from each other.

**4.** The method according to claim 3, wherein the second monomer is at least one monomer represented by the following formula (2):

[Chemical Formula 2]

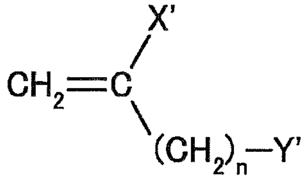

(2)

where X' represents a hydrogen atom or an alkyl group, Y' represents an amino group, a salt of an amino group, a sulfonic acid group, a salt of a sulfonic acid group, or an alkyl group, a phenyl group, an amide group, or an ester substituted with any one of an amino group, a salt of an amino group, a sulfonic acid group, and a salt of a sulfonic acid group, and n is an integer of 0 to 6.

**5.** The method according to claim 1, wherein the first monomer is at least one selected from the group consisting of (meth)acrylic acid, (meth)acrylamide, glycidyl (meth)acrylate, glycerol (meth)acrylate, hydroxypropyl (meth)acrylate, 2-hydroxyethyl (meth)acrylate, 3-chloro-2-hydroxypropyl (meth)acrylate, tetrahydro-2-furanylmethyl (meth)acrylate, 2-furylmethyl (meth)acrylate, alkoxyalkyl (meth)acrylate, oligoalkoxyalkyl (meth)acrylate, alkoxyoligoalkoxyalkyl (meth)acrylate, N-alkyl (meth)acrylamide, N,N-dialkyl (meth)acrylamide, N-(meth)acryloyl-2-methylaziridine, N-(meth)acryloyl aziridine, N-(meth)acryloyl azetidine, N-(meth)acryloyl pyrrolidine, N-(meth)acryloyl piperidine, N-(meth)acryloyl morpholine, N-[tris(hydroxymethyl)methyl](meth)acrylamide, N-hydroxyethyl (meth)acrylamide, N-[2-(2-hydroxyethoxy)ethyl] (meth)acrylamide, 2-dimethylaminoethyl (meth)acrylate, 2-diethylaminoethyl (meth)acrylate, 2-(butylamino)ethyl (meth)acrylate, 2-isocyanatoethyl (meth)acrylate, 2-(diisopropylamino)ethyl (meth)acrylate, 2-N-morpholinoethyl (meth)acrylate, N,N-dimethylaminoethyl (meth)acrylamide, N,N-dimethylaminopropyl (meth)acrylamide, vinylbenzoic acid, hydroxyl group-containing styrene, amino group-containing styrene, hydroxyl group-containing diene, and amino group-containing diene.

**6.** The method according to claim 5, wherein the second monomer is at least one selected from the group consisting of (meth)acrylamide-tert-butyl sulfonic acid, a salt of (meth)acrylamide-tert-butyl sulfonic acid, vinyl sulfonic acid, a salt of vinyl sulfonic acid, styrene sulfonic acid, a salt of styrene sulfonic acid, sulfoalkyl (meth)acrylate, and a salt of sulfoalkyl (meth)acrylate.

**7.** The method according to claim 5, wherein the second monomer is at least one selected from the group consisting of an inorganic acid salt of 2-aminoethyl (meth)acrylate, [2-(meth)acryloyloxyethyl] trimethyl ammonium halide, allylamine, an inorganic acid salt of allylamine, N-methylallylamine, an inorganic acid salt of N-methylallylamine, N-ethylallylamine, an inorganic acid salt of N-ethylallylamine, N-cyclohexylallylamine, an inorganic acid salt of N-cyclohexylallylamine, N,N-dimethylallylamine, an inorganic acid salt of N,N-dimethylallylamine, N,N-diethylallylamine, an inorganic acid salt of N,N-diethylallylamine, N,N-(methyl)cyclohexylallylamine, an inorganic acid salt of N,N-(methyl)cyclohexylallylamine, N,N-(ethyl)cyclohexylallylamine, an inorganic acid salt of N,N-(ethyl)cyclohexylallylamine, N,N-dicyclohexylallylamine, an inorganic acid salt of N,N-dicyclohexylallylamine, allylaziridine, an inorganic acid salt of allylaziridine, allylazetidine, an inorganic acid salt of allylazetidine, allylpyrrolidine, an inorganic acid salt of allylpyrrolidine, allylpiperidine, an inorganic acid salt of allylpiperidine, allylpiperazine, an inorganic acid salt of allylpiperazine, allyl-4-formylpiperadine, an inorganic acid salt of allyl-4-formylpiperadine, allylmorpholine, an inorganic acid salt of allylmorpholine, diallylamine, an inorganic acid salt of diallylamine, N-methyldiallylamine, an inorganic acid salt of N-methyldiallylamine, N-ethyldiallylamine, an inorganic acid salt of N-ethyldiallylamine, N-benzyldiallylamine, an inorganic acid salt of N-benzyldiallylamine, diallyldimethylammonium halide, diallyldiethylammonium halide, diallylmethylbenzylammonium halide, diallylethylbenzylammonium halide, diallyldibenzylammonium halide, 1,1-diallylpiperazinium halide, 1,1-diallyl-4-formylpiperazinium halide, tetraallylammonium halide, tetraallylpiperazinium dihalide, 2-diethylphosphiteisopropyl (meth)acrylate, an inorganic acid salt of 2-diethylphosphiteisopropyl (meth)acrylate, allyldiphenylphosphine, an inorganic acid salt of allyldiphenylphosphine, diallylphenylphosphine, an inorganic acid salt of diallylphenylphosphine, triallylphosphine, an inorganic acid salt of triallylphosphine, allyltriphenylphosphonium halide, and allyl[tolyl(dimethylamino)phosphonium halide].

8. The method according to any one of claims 1 to 7, wherein the polymer substrate is made of at least one selected from the group consisting of polystyrene, polyether ether ketone, polyether ketone, polysulfone, polyether sulfone, polyphenylene sulfide, polyarylate, polyetherimide, aromatic polyimide, polyamide imide, polyethylene, polypropylene, polyvinylidene fluoride, polyvinyl fluoride, ethylene-tetrafluoroethylene copolymer, vinylidene fluoride-hexafluoropropylene copolymer, crosslinked polytetrafluoroethylene, tetrafluoroethylene-perfluoroalkyl vinyl ether copolymer, and tetrafluoroethylene-hexafluoropropylene-vinylidene fluoride copolymer.

9. A polymer electrolyte membrane having ionic conductivity, comprising a polymer having a main chain and a first graft chain and a second graft chain that are bonded to the main chain, wherein
the first graft chain is a graft chain consisting of a first monomer,
the second graft chain is a graft chain consisting of a second monomer,
the second graft chain contains an ion-conducting group,
the first monomer contains a polar group, and
the second monomer has a higher polarity than the first monomer.

**INTERNATIONAL SEARCH REPORT**

International application No.
PCT/JP2013/001574

A. CLASSIFICATION OF SUBJECT MATTER
*H01M8/02*(2006.01)i, *C08J7/18*(2006.01)i, *H01B1/06*(2006.01)i, *H01M8/10*(2006.01)n

According to International Patent Classification (IPC) or to both national classification and IPC

B. FIELDS SEARCHED

Minimum documentation searched (classification system followed by classification symbols)
H01M8/02, C08J7/18, H01B1/06, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-300360 A (Japan Atomic Energy Research Institute),<br>28 October 2004 (28.10.2004),<br>claim 5; paragraphs [0017], [0019], [0048]<br>(Family: none) | 9<br>1-8 |
| X<br>A | JP 2003-261697 A (Japan Atomic Energy Research Institute),<br>19 September 2003 (19.09.2003),<br>claim 1; paragraphs [0019] to [0021], [0056], [0057]<br>(Family: none) | 9<br>1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 May, 2013 (29.05.13) | 11 June, 2013 (11.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/001574

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-157428 A (Nitto Denko Corp.), 21 June 2007 (21.06.2007), claims 1 to 3; paragraphs [0010], [0028], [0033] to [0035] (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005008855 A